(19) Europäisches Patentamt
European Patent Office
Office européen des brevets

(11) **EP 2 398 598 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(21) Anmeldenummer: **10704939.7**

(22) Anmeldetag: **23.02.2010**

(51) Int Cl.:
**B07B 4/08** (2006.01)     **C08G 63/78** (2006.01)
**C08G 63/80** (2006.01)

(86) Internationale Anmeldenummer:
**PCT/EP2010/052248**

(87) Internationale Veröffentlichungsnummer:
**WO 2010/094807 (26.08.2010 Gazette 2010/34)**

(54) **VERFAHREN ZUR HERSTELLUNG VON POLYESTERPARTIKELN BEI HOHEM DURCHSATZ IN EINER LINIE**

PROCESS FOR PRODUCING POLYESTER PARTICLES AT HIGH THROUGHPUT IN ONE LINE

PROCÉDÉ DE PRODUCTION DE GRANULÉS DE POLYESTER À HAUTE RENDEMENT SUR UNE LIGNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.02.2009 DE 102009009957**

(43) Veröffentlichungstag der Anmeldung:
**28.12.2011 Patentblatt 2011/52**

(73) Patentinhaber: **Polymetrix AG**
**9245 Oberbüren (CH)**

(72) Erfinder:
• **CULBERT, Brent Allan**
**CH-9500 Wil (CH)**
• **RODRIGUES, Mauricio**
**CEP-33701-391 Poços de Caldas, MG (CH)**
• **CHRISTEL, Andreas**
**CH-9524 Zuzwil (CH)**
• **GIGER, Franz**
**CH-9244 Niederuzwil (CH)**

(74) Vertreter: **Hepp Wenger Ryffel AG**
**Friedtalweg 5**
**9500 Wil (CH)**

(56) Entgegenhaltungen:
**WO-A1-2004/018541     WO-A1-2004/087784**
**DE-A1- 1 770 410**

**Beschreibung**

Die Erfindung betrifft ein Verfahren zur Herstellung eines thermoplastischen Polyesters gemäss dem Oberbegriff des Anspruchs 1.

Verfahren zur Herstellung von Polyesterpartikeln mittels eines Polymerisationsschrittes in der Schmelzphase und eines anschliessenden Polymerisationsschrittes in der Festphase sind in der Praxis bekannt. Zur Verbesserung der Wirtschaftlichkeit solcher Verfahren werden immer höhere Durchsatzleistungen in einer Produktionslinie verlangt. Zur Behandlung von hohen Durchsätzen in der Festphase werden dazu grosse Reaktoren benötigt.

Bei Reaktoren mit grossem Behälterdurchmesser entsteht jedoch ein hoher Produktdruck im Reaktor, was wiederum die maximal zulässige Reaktortemperatur limitiert und somit zu längeren Verweilzeiten und noch grösseren Reaktoren führt. Wird der Reaktor von einem Prozessgas durchströmt steigt mit der Reaktorhöhe der Druckabfall über den Reaktor, was wiederum die zulässige Prozessgasmenge limitiert und somit ebenfalls zu längeren Verweilzeiten und noch grösseren Reaktoren führt. Gleichzeitig wird der Gebäudeaufwand bei der Behandlung von grossen Produktmengen durch grosse Reaktoren immer grösser, wenn das Aufheizen der Partikel auf einem örtlichen Niveau oberhalb des Reaktors erfolgen soll. Um dies zu verhindern können heisse Partikel von einer Aufheizstufe zum Eintritt in den Reaktor gefördert werden.

Bei grossen Reaktorhöhen ergeben sich auch grosse Förderhöhen. Bei grossen Förderhöhen wird jedoch die Produktschädigung in der Förderung zum limitierenden Faktor.

Für einen wirtschaftlichen Betrieb müssen somit die Reaktorgrösse, der Druckabfall im Reaktor und die Gebäudekosten limitiert werden. Gleichzeitig muss ein schonendes Verfahren zur Förderung von heissen Polyester-Pre-Polymerpartikeln zur Verfügung gestellt werden.

Es ist daher die Aufgabe der vorliegenden Erfindung ein möglichst wirtschaftliches Verfahren zur Verfügung zu stellen, das die schonende Behandlung grosser Mengen an Polyesterpartikel in der Festphase erlaubt.

Das Dokument DE 102005025975A1 offenbart Reaktoren, die bis zu 60t/h Polyestergranulate bearbeiten. Es werden Angaben über Verweilzeit des zu verarbeitenden Materials im Reaktor, Reaktorvolumen und Reaktor UD Verhältnis angegeben.

Es werden jedoch keine Angaben darüber gemacht, wie der Betrieb eines einzelnen Reaktors optimal gestaltet werden muss, um das Produktkleberisiko, den Gasdurchströmungswiderstand und die Produktschädigung durch die Förderung zu minimieren. Es wird beschrieben, dass mehrere in Reihe geschaltete Reaktoren mit mehreren Produktzuförderungen und mehreren Prozess-Gasströmen verwendet werden.

Gegenüber dem Stand der Technik ermöglicht die vorliegende Erfindung die Prozessbedingungen, die Reaktorauslegung und die Auslegung der Förderung für hohe Durchsatzleistungen durch einen Reaktor vorzugeben.

Erfindungsgemäss wird die Aufgabe mit einem Verfahren zur Herstellung eines thermoplastischen Polyesters mit den Merkmalen des Anspruchs 1 dadurch gelöst, dass die Behandlung in fester Phase in Reaktoren erfolgt, durch die die Partikel mit einer hohen Sinkgeschwindigkeit fliessen, um dadurch Produktverklebungen bei möglichst hohen Temperaturen zu verhindern. So erfolgt nach Anspruch 1 die Behandlung in der Festphase des Polyesters in einem Reaktor, wobei die Sinkgeschwindigkeit der Partikel mehr als 2.6 bis 6 Meter pro Stunde beträgt.

Ferner werden die erwärmten Polyester Pre-Polymerpartikel mittels zumindest eines Förderungsschrittes von einem Anfangsniveau (H0) auf ein Eintrittsniveau (HR) in den Reaktor gefördert, wobei das Eintrittsniveau (HR) oberhalb des Anfangsniveaus (H0) liegt und bevorzugt zwischen 40 und 80m über dem Anfangsniveau (H0) angeordnet ist.

Ferner werden die Polyester-Pre-Polymerpartikel vor dem Schritt des Vorerhitzens vorzugsweise durch eine Entstaubungsvorrichtung geführt.

Die vorliegende Erfindung betrifft zudem eine Vorrichtung zur Herstellung eines thermoplastischen Polyesters, umfassend

a) einen Schmelzpolykondensationsreaktor zum Herstellen von Polyester Pre-Polymerpartikeln mit einer intrinsischen Viskosität zwischen 0.35 und 0.75 dl/g
b) mindestens einen Kristallisator zum Kristallisieren der Polyester-Pre-Polymerpartikel zur Herstellung von teilkristallinen Polyester-Pre-Polymerpartikeln
c) mindestens einen Vorerhitzer zum Erwärmen der teilkristallinen Polyester Pre-Polymerpartikel auf eine geeignete Reaktionstemperatur zur Herstellung von erwärmten Polyester-Pre-Polymerpartikeln
d) mindestens einen Reaktor zur Herstellung von Polyester Polymerpartikeln mit einer intrinsischen Viskosität zwischen 0.70 und 0.95 dl/g,

wobei der Anstieg der intrinsischen Viskosität zumindest 0.05, insbesondere zumindest 0.1dl/g beträgt, wobei die intrinsische Viskosität (I.V.) durch Messung der relativen Viskosität (R.V.) einer Polyesterprobe mit einer Konzentration von 0.5% (0.5g/dl) in einer Mischung aus Phenol/Dichlorbenzol (50 : 50 Gew.%) bei 25°C mit einem Ubbelohde-Viskosimeter (nach DIN Anweisung Nr. 53728, Teil 3 vom Januar 1985) anhand der Gleichung $I.V. = \dfrac{\sqrt{1+1.4(R.V.-1)}-1}{0.35}$

(dl/g) ermittelt wird,

dadurch gekennzeichnet, dass vor dem Vorerhitzer c) eine Entstaubungsvorrichtung angeordnet ist,

das Eintrittsniveau (HR) in den Reaktor zwischen 40 und 80m höher als das Austrittsniveau H0 aus dem Vorerhitzer c) liegt, und

der Reaktor vorzugsweise mit einem Massenstrom von zwischen 40 und 100 Tonnen Partikel pro Stunde, einer Verweilzeit der Partikel im Reaktor zwischen 6 und 30 Stunden und einer Sinkgeschwindigkeit der Partikel im Reaktor mehr als 2.6 bis 6 Meter pro Stunde betrieben werden kann.

Gemäss einer bevorzugten Ausführungsform soll das erfindungsgemässe Verfahren in Reaktoren erfolgen, durch die ein Gasstrom fliesst, dessen Druckabfall limitiert ist, um dadurch Reaktoren verwenden zu können, die nicht als Druckbehälter klassiert sind. Erfindungsgemäss erfolgt die Partikelförderung über eine grosse vertikale Strecke in hohe Reaktoren, wobei eine produktschonende Förderung bei niedriger Fördergeschwindigkeit bevorzugt ist, da sich dadurch Produktabrieb und Staubbildung verringern lassen. Gemäss einer bevorzugten Ausführungsform erfolgt das erfindungsgemässe Verfahren mittels einer pneumatischen Förderung.

Das erfindungsgemässe Verfahren dient zur Herstellung eines Polyesters, wobei insbesondere die Herstellung von Polyethylenterephthalat oder eines seiner Copolymere bevorzugt ist.

Bei Polyestern handelt es sich um kristallisierbare, thermoplastische Polykondensate, wie zum Beispiel Polyethylenterephthalat (PET), Polybutylenterephthalat (PBT), Polytrimethylterephthalat (PTT), Polyethylennaphthalat (PEN) oder Polytrimethylnaphthalat (PTN) die entweder als Homopolymer oder als Copolymere vorliegen.

Polyester ist ein Polymer das durch Polykondensation aus seinen Monomeren, einer Diol-Komponente und einer Dicarbonsäure-Komponente, gewonnen wird. Verschiedene, meist lineare oder zyklische Diol-Komponenten mit 2 bis 10 C-Atomen kommen zum Einsatz. Ebenso können verschiedene meist aromatische Dicarbonsäure-Komponenten mit üblicherweise 1 bis 3 aromatischen Ringen zum Einsatz kommen. Anstelle der Dicarbonsäure kann auch ihr entsprechender Di-Ester, insbesondere Dimethylester eingesetzt werden.

Polyester werden üblicherweise durch eine Polykondensationsreaktion unter Abspaltung eines niedermolekularen Reaktionsproduktes gewonnen. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist der so gewonnene Polyester linear, wobei eine geringe Anzahl an Verzweigungen entstehen kann.

Bei dem Polyester kann es sich um ein Neumaterial oder um ein Rezyklat handeln.

Dem Polyester können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Kalziumgehalt zwischen 10 und 200ppm oder ein Titangehalt zwischen 5 und 20ppm bevorzugt ist.

Ein vor allem zur Herstellung von Hohlkörpern, wie zum Beispiel Flaschen, häufig verwendeter Polyester ist Polyethylenterephthalat (PET).

Das Polyethylenterephthalat wird durch Polykondensation unter Abspaltung niedermolekularer Reaktionsprodukte aus seinen Monomeren, einer Diol-Komponente und einer Dicarbonsäure-Komponente, gewonnen. Dabei besteht die Diol-Komponenten mehrheitlich, insbesondere zu mehr als 90 mol-%, aus Ethylenglykol (1,2 Ethandiol) und die Dicarbonsäure-Komponenten mehrheitlich, insbesondere zu mehr als 90 mol-%, aus Terephthalsäure, wobei der Comonomergehalt insgesamt üblicherweise zwischen 1 und 15 mol% insbesondere zwischen 2 und 10 mol% liegt.

Anstelle der Terephthalsäure kann auch ihr entsprechender Di-Ester, insbesondere Dimethylester eingesetzt werden. Der Comonomergehalt entspricht dabei der Summe des Diol-Comonomergehaltes und des Dicarbonsäure-Comonomergehaltes. Der Diol-Comonomergehalt wird bestimmt als Anzahl mol der Diol-Comonomere bezogen auf die gesamte Anzahl mol der Diole. Der Dicarbonsäure-Comonomergehalt wird bestimmt als Anzahl mol der Dicarbonsäure-Comonomere bezogen auf die gesamte Anzahl mol der Dicarbonsäuren.

Als Comonomere kommen weitere lineare, zyklische oder aromatische Diol- und Dicarbonsäureverbindungen in Frage. Typische Comonomere sind Diethylenglykol (DEG), Isopthalsäure (IPA) oder 1,4-Bis-hydroxymethyl-cyclohexan (CHDM).

Als niedermolekulare Reaktionsprodukte entstehen zum Beispiel Wasser, Ethylenglykol, Acetaldehyd, Methanol, sowie allfällige weiter Diole.

Zur Herstellung von Polyester Pre-Polymerpartikeln muss zunächst eine Polyester-Pre-Polymerschmelze hergestellt werden, die dann abgekühlt und zu Partikeln geformt wird.

Die Herstellung der Polyester Pre-Polymerschmelze erfolgt dabei durch Polykondensation der Monomere in flüssiger Phase (Schmelzephasenpolykondensation). Üblicherweise erfolgt die Herstellung der Polykondensatschmelze in einem kontinuierlichen Prozess.

Dabei finden üblicherweise zunächst eine Stufe zur Vermischung von Monomeren (Pastenherstellung), eine Veresterungsstufe und dann eine Pre-Polykondensationsstufe unter Vakuum statt. Im konventionellen Polyesterherstellprozess folgt ebenfalls unter Vakuum eine Polykondensationsstufe im Hochviskositätsreaktor (auch Finisher genannt). Dadurch entsteht ein Polyester Pre-Polymer mit einer intrinsischen Viskosität typischerweise zwischen 0.35dl/g und 0.8dl/g, insbesondere mit über 0.5dl/g und mit unter 0.7dl/g. (Vergleiche zum Beispiel: Modern Polyesters, Wiley Series in Polymer Science, Edited by John Scheirs, J. Wiley & Sons Ltd, 2003; Kapitel 2.4.2). Die Polyesterherstellung kann auch in einem batch Prozess erfolgen (Vergleiche zum Beispiel: Modern Polyesters, Wiley Series in Polymer Science, Edited by John Scheirs, J. Wiley & Sons Ltd, 2003; Kapitel 2.4.1)

Alternativ kann die oben erwähnte Polykondensationsstufe im Hochviskositätsreaktor weggelassen werden. Dadurch entsteht ein niedrigviskoses Polyester Pre-Polymer mit einer intrinsischen Viskosität typischerweise zwischen 0.2dl/g und 0.5dl/g, insbesondere mit über 0.3dl/g und mit unter 0.45dl/g.

Die Herstellung der Polyester-Pre-Polymerschmelze erfolgt alternativ auch durch Aufschmelzen von Polyestern als Rohprodukt. Dies kann zum Beispiel durch einen kontinuierlichen Kneter oder Extruder oder auch in einem Polymerisationsreaktor erfolgen. Die Polyester liegen dabei in fester Form vor, zum Beispiel als Granulate, Pulver oder Schnitzel. Üblicherweise ist es vorteilhaft Polyester vor dem Aufschmelzen zu trocknen. Nach dem Aufschmelzen kann optional ein weiterer Polykondensationsschritt erfolgen. Ebenso kann durch Aufschmelzen und Depolymerisieren ein bereits höher viskoser Polyester auf ein niedrigeres Viskositätsniveau gebracht werden.

Die Polyester-Pre-Polymerschmelze kann auch aus einem Gemisch aus frisch polymerisiertem und aufgeschmolzenem Polyester hergestellt werden, wobei aufgeschmolzener Polyester dem frisch polymerisierten Polyester am Ende der Polymerisationsstrecke oder einem Zwischenschritt zugefügt werden kann.

Besonders wenn rezyklierte Polyester aufgeschmolzen werden, ist es vorteilhaft die Schmelze vor dem zusammenfügen mit frisch polymerisierter Schmelze durch eine in-line oder on-line Messung auf Qualitätsmerkmale, wie zum Beispiel Viskosität oder Farbe zu prüfen, um allfällig minderwertige Produkte, zum Beispiel zu einer separaten Granuliervorrichtung, abzuzweigen und dadurch eine Verunreinigung von Neumaterial zu verhindern. Die in-line Messung erfolgt dabei direkt im aufgeschmolzenen Pre-Polymer. Die on-line Messung kann in einem Seitenstrom der Schmelze oder an einem daraus hergestellten Probekörper, Strang, Band, Granulat oder dergleichen erfolgen.

Üblicherweise wird die Polyester Pre-Polymerschmelze einer Filtration unterzogen, um feste Verunreinigungen zu eliminieren, wobei je nach Viskosität Siebe mit Maschenweiten zwischen 5 und 150μm zum Einsatz kommen.

Erfindungsgemäss wird eine Polyester-Pre-polymerschmelze mit einer intrinsischen Viskosität von zwischen 0.35 und 0.75dl/g, bevorzugt von über 0.45dl/g, insbesondere von über 0.5dl/g und bevorzugt von unter 0.7dl/g, insbesondere von unter 0.65dl/g, hergestellt.

Die intrinsische Viskosität (IV) gibt dabei die Lösungsviskosität an und wird nach folgender Vorschrift bestimmt:

Zur Messung der Lösungsviskosität wird eine Mischung aus Phenol/Dichlorbenzol (50 : 50 Gew.%) als Lösungsmittel benutzt. Die Polyesterprobe wird während 10 Minuten bei 130°C mit einer Konzentration von 0.5% (0.5g/dl) aufgelöst. Die Messung der relativen Viskosität (R.V.) wird bei 25°C mit einem Ubbelohde-Viskosimeter (nach DIN Anweisung Nr. 53728, Teil 3 vom Januar 1985) durchgeführt.

Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1 + 4K_H(R.V. - 1)} - 1}{2 * c * K_H}$$

Mit den obigen Messmethoden (Polymerkonzentration C=0,5.g/dl und der Huggins Konstante $K_H$=0.35) wird die Gleichung:

$$I.V. = \frac{\sqrt{1 + 1.4(R.V. - 1)} - 1}{0.35} \quad \text{(dl/g)}$$

Die Viskosität des Polyesters kann entweder als intrinsische Viskosität (IV) oder als mittleres Molekulargewicht (Zahlenmittel : Mn) angegeben sein. Zur Umrechnung eines IV-Wertes gemessen in Phenol : Dichlormethan = 1: 1 in das mittlere Molekulargewicht wird die Gleichung

$$IV = k \cdot Mn^a$$

verwendet, wobei k=2.1 E-4 und a=0.82 ist.

Diese Gleichung ist allgemein auf publizierte Daten anwendbar, wenn nicht explizit ein anderes Lösemittelgemisch und die dazu gehörenden Umrechnungsfaktoren gegeben sind.

Aus dem mittleren Molekulargewicht lässt sich die Endgruppenkonzentration (EGN) berechnen mit der Gleichung :

$$EGN = 2E6/Mn,$$

wobei Mn in g/mol eingesetzt wird und EGN in mol/t resultiert.

Mittels der Carboxylendgruppenkonzentration ($c_{COOH}$) und der Endgruppenkonzentration lässt sich der Gehalt der einzelnen Endgruppen berechnen, wobei zur Vereinfachung nur die Präsenz von Hydroxyl- und Carboxylendgruppen berücksichtigt wird, womit EGN = $C_{COOH}$ + $C_{OH}$ wird.

$$\text{Carboxylendgruppengehalt } X_{COOH} = c_{COOH} / EGN;$$

$$\text{Hydroxylendgruppengehalt } X_{OH} = c_{OH} / EGN = (1 - X_{COOH})$$

Dabei bezeichnet $C_{COOH}$ die Konzentration an Carboxylendgruppen in mol/t und $C_{OH}$ die Konzentration an Hydroxylendgruppen in mol/t.

Gemäss einer bevorzugten Ausführung der vorliegenden Erfindung werden die Mengen der Diol-Komponenten und der Dicarbonsäure-Komponenten sowie die Bedingungen im Pre-Polyester-Herstellungsprozess so gewählt, dass ein Pre-Polyester mit einem Carboxylendgruppengehalt von zwischen 0.25 und 0.6, entsteht, wobei der Carboxylendgruppengehalt bevorzugt über 0.30, insbesondere über 0.35, und bevorzugt unter 0.55, insbesondere unter 0.5, liegt.

Die Partikel können aus der Polyester-Pre-Polymerschmelze auf verschiedene Arten geformt werden. Anwendbar ist ein Zerkleinern von Brocken, Strängen oder Bändern die aus der Polymerschmelze geformt wurden oder ein direktes Formen von Partikeln zum Beispiel durch Vertropfen oder Zerstäuben.

Das Abkühlen und Formen der Polyester-Pre-Polymerschmelze erfolgt üblicherweise durch Granulation.

Bei der Granulation wird die Polyester-Pre-Polymerschmelze z.B. durch eine Düse mit einer Öffnung (Loch) oder einer Vielzahl von Öffnungen gepresst und geschnitten oder vertropft.

Die Düsenöffnungen sind üblicherweise rund, können aber auch ein anderes Profil, wie z.B. schlitzförmige Öffnungen darstellen. Es ist darauf zu achten, die Produktflussmenge pro Düsenloch zeitlich und örtlich in einem engen Bereich zu halten, wobei die Standardabweichung der einzelnen Produktflussmengen zwischen 0.1 und 10% gehalten werden soll. Um dies zu erreichen, kann je nach Position eines Düsenloches deren Durchmesser oder Länge variiert sein. Gleichzeitig ist auf möglichst gleichmässige Anströmbedingungen (Druck, Geschwindigkeit, Temperatur, Viskosität usw.) der einzelnen Düsenlöcher zu achten.

Das Schneiden kann sowohl direkt am Düsenaustritt erfolgen oder aber erst nach Durchlaufen einer Behandlungsstrecke.

Durch die Abkühlung wird die Polyester Pre-Polymerschmelze verfestigt. Dies kann mit Hilfe eines flüssigen Kühlmediums (z. B. Wasser, Ethylenglykol) oder gasförmigen Kühlmediums (z. B. Luft, Stickstoff, Wasserdampf) erfolgen, oder durch Kontakt mit einer kalten Oberfläche, wobei auch Kombinationen der Kühlmedien denkbar sind.

Die Abkühlung kann sowohl gleichzeitig, wie auch vor oder nach dem Formen zu Partikeln stattfinden.

Bekannte Granulationsprozesse sind zum Beispiel Rotoformen, Stranggranulation, Wasserringgranulation, Unterwassergranulation oder Kopfgranulation (auch hot face - Granulation), sowie Vertropfen oder Zerstäuben. Solche Verfahren sind z.B. in den Schriften WO 00/23497 Matthaei, WO 01/05566 Glöckner et al., WO05/087838 Christel et al., WO 03/054063 Culbert et al. sowie WO96/22179 Stouffer et al. beschrieben, die mit in die vorliegende Erfindung eingeschlossen werden.

Wird ein flüssiges Kühlmedium verwendet, so muss dieses abgetrennt werden, was zum Teil über einfache Abscheider, wie Siebe oder Roste, erfolgt und zusätzlich durch Zentrifugalkraft, zum Beispiel in einem Zentrifugaltrockner, durch einen Aufprall, zum Beispiel in einem Pralltrockner, und/oder durch einen Gasstrom erfolgen kann.

Die mittlere Granulatgrösse soll zwischen 0.1 mm und 10mm, bevorzugterweise zwischen 0.5mm und 3mm und insbesondere zwischen 0.85 und 2.5mm liegen. Als mittlere Granulatgrösse gilt der statistische Mittelwert des mittleren Granulatdurchmessers, der sich aus dem Durchschnitt aus Granulathöhe, -länge und -breite ergibt.

Die Granulatgrössenverteilung soll in einem engen Spektrum gehalten werden. Bevorzugt ist die Standardabweichung der Granulatgewichte von 100 gemessenen Granulaten zwischen 2 und 20%. Die Granulate können eine definierte Granulatform, wie zum Beispiel zylinderförmig, kugelförmig, tropfenförmig, kugelähnlich oder eine Design-Form, wie sie zum Beispiel in EP0541674B1 vorgeschlagen ist, aufweisen.

Es können solide Granulate oder poröse Granulate, die zum Beispiel durch Schäumung, Sinterung und dergleichen gewonnen werden, verwendet werden.

Die Abkühlung kann auf eine Temperatur, die unterhalb der Glasübergangstemperatur des Polyesters liegt, erfolgen, was die Lagerung und/oder den Transport der Granulate über einen längeren Zeitraum erlaubt.

Die durchschnittliche Temperatur der Pre-Polyestergranulate kann aber auch auf einem höheren Niveau gehalten werden, um die Energieeffizienz der nachfolgenden Prozesse zu verbessern. Dazu ist es möglich, die Temperatur des Kühlmediums anzuheben und/oder die Verweilzeit im Kühlmedium entsprechend kurz zu wählen.

Obwohl eine teilweise Kristallisation bereits während der Herstellung der Polyester-Pre-Polymerpartikel erfolgen kann, ist üblicherweise ein Schritt zur Kristallisation notwendig, um teilkristalline Polyester Pre-Polymerpartikel zu erhalten.

Die Kristallisation kann eigenständig oder gekoppelt mit der Partikelherstellung stattfinden. Mehrere Vorrichtungen zur Herstellung von Partikeln können mit einer Kristallisationsvorrichtung verbunden sein. Die Kristallisation kann in einem Schritt oder in mehreren Schritten und somit in einem oder in mehreren hintereinander folgenden Vorrichtungen stattfinden. Die Kristallisation kann kontinuierlich oder batchweise erfolgen. Optional kann die Kristallisation in zwei oder mehreren parallel betriebenen Vorrichtungen erfolgen.

Die Kristallisation erfolgt nach den im Stand der Technik bekannten Verfahren, zum Beispiel durch thermische Kristallisation, durch lösemittelinduzierte Kristallisation oder durch Kristallisation durch mechanische Verstreckung. Bevorzugt erfolgt die Kristallisation auf thermischem Weg, wodurch ein thermisch teilkristallisiertes Polykondensat entsteht.

Die Kristallisation soll bei einer geeigneten Temperatur über eine geeignete Verweilzeit erfolgen. Durch die Kristallisation soll zumindest ein Kristallisationsgrad erreicht werden, der eine weitere thermische Behandlung, wie zum Beispiel eine Trocknung oder eine Festphasen-Polykondensation erlaubt, ohne dass es dort zu Verklebungen oder Klumpenbildungen kommt.

Der geeignete Temperaturbereich wird ersichtlich, wenn man die Kristallisationshalbwertszeit (t½) gemessen im DSC als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit t½min erreicht. Da sehr kurze Kristallisationshalbwertszeiten (t½) nur schwer bestimmbar sind, wird als Minimalwert t½min = 1 Minute eingesetzt.

Die geeignete Kristallisationszeit ergibt sich aus der Zeit, um das Produkt auf die Kristallisationstemperatur aufzuheizen, plus zumindest der Kristallisationshalbwertszeit bei der gegebenen Temperatur, wobei bevorzugt 2 - 20 Halbwertszeiten zur Aufheizzeit dazugezählt werden, um eine ausreichende Kristallisation zu erreichen.

Um ein Verkleben der kristallisierenden Pre-Polymerpartikel zu verhindern, sollen diese relativ zueinander in Bewegung gehalten werden. Geeignete Kristallisationsreaktoren sind vibrierende Reaktoren, drehende Reaktoren, Reaktoren mit Rührwerken, sowie Reaktoren die von einem Prozessgas durchströmt werden, wobei die Strömungsgeschwindigkeit des Prozessgases ausreichen muss, um die Pre-Polymerpartikel zu bewegen. Bevorzugt sind Strömungsgeschwindigkeiten im Bereich von 1 - 6 m/s, insbesondere grösser als 1.5 m/s und kleiner als 4 m/s. Die Gasgeschwindigkeit entspricht dabei der Leerrohrgeschwindigkeit, also der Gasmenge pro Zeit geteilt durch den Querschnitt des Behandlungsraumes.

Besonders geeignete Kristallisationsreaktoren sind Fliessbett- oder Wirbelbettkristallisatoren, da diese nicht zur Staubbildung neigen.

Bei Polyethylenterephthalat liegt der geeignete Temperaturbereich zwischen 100 und 220°C, und es wird in 5 bis 20 Minuten ein Kristallisationsgrad von zumindest 20%, bevorzugterweise von zumindest 30% erreicht.

Die Kristallisation kann aus dem Glaszustand, das heisst nach vorübergehender Abkühlung auf eine Temperatur unterhalb der Kristallisationstemperatur, insbesondere unterhalb der Glasübergangstemperatur Tg erfolgen.

Geeignet sind auch Verfahren, bei denen die Kristallisation zumindest teilweise aus der Schmelze erfolgt, wobei ein Anstieg der Kristallinität während der Abkühlphase und/oder einer Haltephase bei erhöhter Temperatur erfolgt.

Liegt die Temperatur der Polyester Pre-Polymerpartikel, beim Eintritt in den Kristallisationsprozess unterhalb der geeigneten Kristallisationstemperatur, so müssen die Polyester Pre-Polymerpartikel aufgeheizt werden. Dies kann zum Beispiel über eine beheizte Wand des Kristallisationsreaktors, über beheizte Einbauten im Kristallisationsreaktor, durch Strahlung oder durch das einblasen eines heissen Prozessgases erfolgen.

Gleichzeitig mit dem Anheben des Kristallisationsgrades, werden auch allfällige Reste der Flüssigkeit aus dem Granulierprozess entfernt.

Wird im Kristallisationsprozess ein Prozessgas im Kreislauf verwendet, so muss diesem genügend Frischgas oder gereinigtes Prozessgas zugesetzt werden, um eine übermässige Anreicherung der Flüssigkeit oder anderer ausdiffundierender Substanzen zu verhindern. Als Prozessgase können zum Beispiel Luft, Wasserdampf oder Inertgase wie Stickstoff, $CO_2$ oder Gemische daraus zum Einsatz kommen. Die Prozessgase können Additive enthalten, die entweder reaktiv auf das zu behandelnde Produkt einwirken oder sich passiv auf dem zu behandelnden Produkt ablagern.

Weitere Aggregate, wie Wärmetauscher, Separieraggregate, wie Filter oder Zyklone, Gasförderaggregate, wie Gebläse, Kompressoren oder Ventilatoren, Gasreinigungssysteme, wie Gaswäscher, Verbrennungssysteme oder Adsorptionssysteme, oder Armaturen, wie Klappen, Ventile oder Abzweigungen, können in den Prozessgaskreislauf integriert sein.

Optional können die Polyester Pre-Polymerpartikel vor einer Kristallisation einer Behandlung zur Reduktion ihrer Klebeneigung unterzogen werden, wie dies in PCT/CH2008/000389 beschrieben ist, die mit in die vorliegende Erfindung eingeschlossen wird.

Optional können die Polyester Pre-Polymerpartikel vor der Kristallisation erwärmt werden. Dies kann in einer Vorwärmstufe erfolgen, wobei die Wärmezufuhr aus einem späteren Kühlschritt stammen kann, wie dies in EP01789469B1 beschrieben ist, die mit in die vorliegende Erfindung eingeschlossen wird. Alternativ kann die Wärme auch direkt für die Vorwärmstufe erzeugt werden oder durch Wärmerückgewinnung aus einer Wärmequelle aus einem Vorgelagerten Prozess der Schmelzephasenpolymerisation erfolgen. Bei der Herstellung von Polyethylenterephthalat lässt sich zum Beispiel der Dampf aus der Kolonne zur Trennung von Wasser und Ethylenglykol als Wärmequelle für die Vorwärmstufe verwenden.

Besonders geeignet Apparate zur Kristallisation sind Fliessbettapparate, wie diese zum Beispiel in der EP-1 425 146 A2 beschrieben sind, deren diesbezüglicher Inhalt durch Bezugnahme in dieser Anmeldung eingeschlossen ist. Das Erhitzen auf Kristallisationstemperatur und die anschliessende Kristallisation kann in einem oder mehreren Kristallisationsapparaten erfolgen. Die Grösse der benötigten Apparate wird dabei mit der Summe aller Flächen der Siebbleche der Apparate angegeben, wobei sich für eine Behandlung von 40 bis 100 t/h Siebbodenflächen von 10 bis 100m$^2$ ergeben. Bei der Kristallisation von kalten PET Granulaten sind Siebblechflächen von 20 bis 60m$^2$ notwendig.

Im Anschluss an die Kristallisation ist ein Schritt zum Erwärmen der teilkristallinen Polyester Pre-Polymerpartikel auf eine geeignete Reaktionstemperatur notwendig, um erwärmte Polyester Pre-Polymerpartikel zu erhalten.

Es hat sich erfindungsgemäss gezeigt, dass es für den Betrieb einer Anlage mit hohem Durchsatz sehr vorteilhaft ist, die teilkristallinen Polyester Pre-Polymerpartikel durch eine Entstaubungsvorrichtung zu führen, da sonst die Effizienz bei der Durchführung der nachfolgenden Schritte Einbussen erleidet.

Das Erwärmen kann eigenständig oder gekoppelt mit der Kristallisation stattfinden. Mehrere Vorrichtungen zur Kristallisation können mit einer Vorrichtung zum Erwärmen verbunden sein. Das Erwärmen kann in einem Schritt oder in mehreren Schritten und somit in einem oder in mehreren hintereinander folgenden Vorrichtungen stattfinden. Das Erwärmen kann kontinuierlich oder batchweise erfolgen. Optional kann das Erwärmen in zwei oder mehreren parallel betriebenen Vorrichtungen erfolgen.

Geeignete Vorrichtungen zum Erwärmen sind drehende Reaktoren, Reaktoren mit Rührwerken, sowie Reaktoren die von einem Prozessgas durchströmt werden.

Die geeignete Reaktionstemperatur liegt in einem Temperaturbereich, der nach unten begrenzt ist durch eine minimale Reaktionsgeschwindigkeit des Polyesters und nach oben begrenzt ist durch eine Temperatur, die geringfügig unter der Schmelztemperatur des Polyesters liegt. Üblicherweise liegt die Reaktionstemperatur 5 bis 80°C unter der kristallinen Schmelztemperatur des Polyesters.

Gleichzeitig mit dem Erwärmen findet eine Temperung statt, durch die die Kristallstruktur derart verbessert wird, dass die Klebeneigung der Polyester Pre-Polymerpartikel reduziert wird. Die Temperung kann dabei bei der geeigneten Reaktionstemperatur erfolgen oder bei einer Temperatur, die um 1 bis 30°C über der geeigneten Reaktionstemperatur liegt. Erfolgt die Temperung bei einer höheren Temperatur, so muss die Temperatur der Polyester Pre-Polymerpartikel auf die geeignete Reaktionstemperatur abgesenkt werden.

Die Zeit zum Erwärmen und Tempern ist dabei von der gewünschten Kristallstruktur abhängig und kann einige Minuten bis einige Stunden betragen.

Erfolgt das Erwärmen im Wesentlichen durch Einwirkung eines Prozessgases, so wird eine "Gasmenge zu Produktmenge" (mg/mp) von 1.5 bis 15, insbesondere 2.5 bis 10 verwendet, wodurch sich im wesentlichen die Temperatur des Produktes an die Temperatur des Gases annähert. Dabei ist "mp" die Summe aller dem Prozess zugeführter Produktströme, und "mg" die Summe aller dem Prozess zugeführter Gasströme. Als Prozessgase können zum Beispiel Inertgase, wie Stickstoff, CO2 oder Gemische aus Inertgasen verwendet. Das Prozessgas kann Additive enthalten, die entweder reaktiv auf das zu behandelnde Produkt einwirken oder sich passiv auf dem zu behandelnden Produkt ablagern.

Wird zum Erwärmen ein Prozessgas im Kreislauf verwendet, so muss diesem genügend Frischgas oder gereinigtes Prozessgas zugesetzt werden, um eine übermässige Anreicherung ausdiffundierender Substanzen zu verhindern.

Weitere Aggregate, wie Wärmetauscher, Separieraggregate, wie Filter oder Zyklone, Gasförderaggregate, wie Gebläse, Kompressoren oder Ventilatoren, Gasreinigungssysteme, wie Gaswäscher, Verbrennungssysteme oder Adsorptionssysteme, oder Armaturen, wie Klappen, Ventile oder Abzweigungen, können in den Prozessgaskreislauf integriert sein.

Für Polyethylenterephthalat ist eine Zeit zum Erwärmen und Tempern von 10 Minuten bis 2 Stunden und eine Temperungstemperatur von 200°C bis 245°C typisch. Der Sauerstoffgehalt des Inertgases soll unter 500ppm, insbesondere unter 100ppm betragen. Eine Variante sieht vor, dass das Erwärmen in einem Zeitraum kleiner als 10 Minuten erfolgt. Dies ist in der Schrift WO02/068498 beschrieben, die mit in die vorliegende Erfindung eingeschlossen wird.

Für Polyethylenterephthalat ist eine Zeit zum Erwärmen und Tempern von 10 Minuten bis 2 Stunden und eine Temperungstemperatur von 200°C bis 245°C typisch. Der Sauerstoffgehalt des Inertgases soll unter 500ppm, insbesondere unter 100ppm betragen. Eine Variante sieht vor, dass das Erwärmen in einem Zeitraum kleiner als 10 Minuten erfolgt. Dies ist in der Schrift WO02/068498 beschrieben, die mit in die vorliegende Erfindung eingeschlossen wird. Besonders geeignet Apparate zum Vorerhitzen sind Dächerapparate (wie diese zum Beispiel in der DE 4300913 A1 beschrieben sind), Kreuzstromapparate (wie diese zum Beispiel in der EP-1 019 663 A1 beschrieben sind), sowie Gegenstromapparate (wie diese zum Beispiel in der CN-101579610 A (entspricht der anhängigen Schweizer Patentanmeldung CH 0735/08) beschrieben sind). Die diesbezüglichen Inhalte der genannten Patentanmeldungen sind durch Bezugnahme in diese Anmeldung eingeschlossen. Das Vorerhitzen kann in einem oder mehreren Apparaten erfolgen. Die Grösse der benötigten Apparate wird dabei mit der Summe aller Apparatevolumen angegeben, wobei sich für eine Behandlung von 40 bis 100 t/h Apparatevolumen von 50 bis 300 m$^3$ ergeben und Apparatehöhen im Bereich von 10 bis 50 m resultieren.

Im Anschluss an das Erwärmen ist ein Schritt zum Reagieren der erwärmten Polyester-Pre-Polymerpartikel notwendig, um Polyester-Partikel mit einer intrinsischen Viskosität zwischen 0.70 und 0.95dl/g, insbesondere über 0.75dl/g zu erhalten. Dabei beträgt der Anstieg der intrinsischen Viskosität zumindest 0.05, insbesondere zumindest 0.1dl/g.

Das Reagieren der erwärmten Polyester-Pre-Polymerpartikel erfolgt in einem geeigneten, im Wesentlichen vertikalen Reaktor. Erfindungsgemäss erfolgt die Zufuhr der erwärmten Polyester-Pre-Polymerpartikel in den oberen Teil des Reaktors, wodurch die Polyesterpartikel den Reaktor mittels Schwerkraft von oben nach unten durchfliessen. Die Polyesterpartikel durchfliessen den Reaktor dabei als Festbett, was auch als bewegtes Festbett bezeichnet wird. Dabei wird ein möglichst enges Verweilzeitspektrum der einzelnen Partikel angestrebt. Eine Verwirbelung oder anderweitig aktive Durchmischung der Partikel soll vermieden werden.

Mehrere Vorrichtungen zum Erwärmen können mit einem Reaktor verbunden sein. Üblicherweise erfolgt das Reagieren in einem Reaktor. Optional kann das Reagieren in Das Reagieren erfolgt in einem Temperaturbereich von 5 bis 80°C unterhalb des kristallinen Schmelzpunktes der Polyesterpartikel, wobei Temperaturen mit weniger als 60°C und/oder mit mehr als 20°C unterhalb des kristallinen Schmelzpunktes der Polykondensatpartikel bevorzugt sind. Durch das Reagieren und durch eine fortlaufende Kristallisation während der Reaktion kann die Temperatur der Polyesterpartikel um zwischen 1 und 20°C ansteigen, wobei auch die dadurch entstehende maximale Temperatur im Bereich der geeigneten Reaktionstemperatur liegen soll.

Die geeignete Reaktionszeit beträgt zwischen 6 und 30 Stunden, wobei aus wirtschaftlichen Gründen Verweilzeiten von weniger als 24 Stunden, insbesondere weniger als 20 Stunden, sowie von mehr als 8 Stunden bevorzugt sind.

Gemäss einer bevorzugten Ausführung der vorliegenden Erfindung werden die Polyesterpartikel im Reaktor von Prozessgas durchströmt. Als Prozessgas können Inertgase, wie Stickstoff, $CO_2$ oder Gemische aus Inertgasen verwendet werden. Das Prozessgas kann Additive enthalten, die entweder reaktiv auf das zu behandelnde Produkt einwirken oder sich passiv auf dem zu behandelnden Produkt ablagern. Das Prozessgas wird im Wesentlichen im Kreislauf geführt. Um eine Beeinträchtigung der Polykondensationsreaktion zu vermindern muss das Prozessgas von unerwünschten Produkten, insbesondere Spaltprodukten der Polykondensationsreaktionen gereinigt werden. Typische Spaltprodukte wie Wasser, Diole (z.B. Ethylenglykol, Propandiol, Butandiol) oder Aldehyde (z.B. Acetaldehyd) sollen dabei auf Werte unter 1000ppm reduziert werden. Dabei sollen Spaltprodukte der reversiblen Polykondensationsreaktionen auf Werte unter 100ppm reduziert werden. Die ppm-Angaben sind als Gewichtsanteile gegeben. Die Reinigung kann durch im Stand der Technik bekannte Gasreinigungssysteme wie zum Beispiel katalytische Verbrennungssystem, Gaswäscher, Adsorptionssysteme oder Kühlfallen erfolgen. Katalytische Verbrennungssysteme sind zum Beispiel bekannt aus WO00/07698, EP0660746B2 und DE102004006861A1, die mit in die vorliegende Erfindung eingeschlossen werden. Mehrere Reinigungssysteme können verwendet werden. Zusätzliche Reinigungsschritte können vorgesehen werden. Ein Abtrennen von Feststoffen kann zum Beispiel durch Filter oder Zyklone erfolgen. Verschiedene Inertgasströme können zur Reinigung in ein Gasreinigungssystem zusammengefasst oder einzeln behandelt werden. Üblicherweise wird dem Kreislauf zusätzlich eine Menge an frischem Prozessgas zugeführt.

Weitere Aggregate, wie Wärmetauscher, Gasförderaggregate, wie Gebläse, Kompressoren oder Ventilatoren, oder Armaturen, wie Klappen, Ventile oder Abzweigungen, können in den Prozessgaskreislauf integriert sein.

Für Polyethylenterephthalat liegt die geeignete Nachkondensationstemperatur in einem Temperaturbereich

EP 2 398 598 B1

von 190°C bis 240°C, wobei Temperaturen unter 225°C bevorzugt sind.

Als Spaltprodukte der reversiblen Polykondensationsreaktionen entstehen dabei insbesondere Wasser und Ethylenglykol.

Erfolgt das Reagieren im Wesentlichen durch Einwirkung eines Prozessgases, so wird eine "Gasmenge zu Produktmenge" (mg/mp) von 0.2 bis 2, insbesondere 0.6 bis 1.4 verwendet, wodurch sich im wesentlichen die Temperatur des Gases an die Temperatur des Produktes annähert. Dabei ist "mp" die Summe aller dem Prozess zugeführter Produktströme, und "mg" die Summe aller dem Prozess zugeführter Gasströme. Einem Reaktor können ein oder mehrere Gasströme zugeführt werden, die sich insbesondere durch ihre Temperatur unterscheiden. Die Temperatur eines zugeführten Prozessgases kann über, im oder unter dem Temperaturbereich der geeigneten Reaktionstemperatur liegen. Soll die Temperatur der Polyesterpartikel beim Gaseintritt nicht verändert werden, so muss das Prozessgas auf die Temperatur der Polyesterpartikel aufgeheizt werden. Soll die Temperatur der Polyesterpartikel beim Gaseintritt gesenkt werden, so kann das Prozessgas mit tieferer Temperatur zugeführt werden.

Üblicherweise wird das Prozessgas am unteren Ende des Reaktors zugeführt und am oberen Ende des Reaktors entnommen, wodurch sich ein Prozessgasstrom im Gegenstrom zum Fluss der Polyesterpartikel ergibt. Umgekehrt ist aber auch ein Gleichstrom vom oberen Ende des Reaktors zum unteren Ende des Reaktors denkbar. Aufgrund des Strömungswiderstandes im mit Polyesterpartikeln gefüllten Reaktor ergibt sich eine Druckdifferenz zwischen Gaseintritt und Gasaustritt, wobei diese Druckdifferenz von der Reaktorhöhe, der Grösse und Form der Polyesterpartikel sowie der Gasgeschwindigkeit und somit von der Gasmenge und dem Reaktordurchmesser abhängt.

Gemäss einer bevorzugten Ausführungsform der vorliegenden Erfindung beträgt die Druckdifferenz zwischen dem Gaseinlass in den Reaktor und dem Gasauslass aus dem Reaktor zwischen 450 und 1000mbar. Bevorzugt sind Druckdifferenzen über 500mbar und unter 900mbar. Am Reaktoraustritt liegt dabei ein Überdruck von 20 bis 300mbar vor, wobei sich durch einen höheren Ausgangsdruck, bevorzugt von mehr als 50mbar, insbesondere von mehr als 100mbar, die Gasgeschwindigkeit im Reaktor und damit der Druckabfall im Reaktor senken lässt.

Geeignete Reaktoren sind Schachtreaktoren, die auch als Festbettreaktoren oder Bewegtbettreaktoren bezeichnet werden. Ein Schachtreaktor weist üblicherweise eine zylindrische Form mit zum Beispiel rundem oder rechteckigem Querschnitt auf. Dabei wird der Reaktor nach oben mit einem Deckel und nach unten mit einem Auslaufkonus abgeschlossen. Ein Reaktor mit einem Durchmesser (D) und einer Länge (L) weist üblicherweise ein L/D-Verhältnis von zwischen 5 und 11 auf. Dabei gilt für L die zylindrische Länge des Reaktors ohne den Auslaufkonus und für D der durchschnittliche Durchmesser über die zylindrische Länge, wobei bei runden Querschnitten direkt der Durchmesser, bei quadratischen Querschnitten die Kantenlänge und bei unregelmässigen Querschnitten die Wurzel aus der Querschnittsfläche verwendet wird.

Die Grösse der benötigten Reaktoren wird dabei mit der Summe aller Reaktorvolumen angegeben, wobei sich für eine Behandlung von 40 bis 100 t/h Reaktorvolumen von 400 bis 3000 m$^3$, insbesondere grösser als 500 m$^3$ ergeben und Apparatehöhen inklusive dem Auslaufkonus im Bereich von 30 bis 60 m, insbesondere grösser 40 m resultieren.

Der Reaktor kann Einbauten aufweisen, die zum Beispiel zur Vergleichmässigung der Strömungsverhältnisse, als Gaseintritt oder zur Reduktion des Produktdruckes dienen. Derartige Reaktoren sind zum Beispiel in den Schriften EP1337321 B1, US6010667 und DE102007031653A1 beschrieben, die mit in die vorliegende Erfindung eingeschlossen werden.

Zur Verhinderung von Wärmeverlusten kann der Reaktor nach aussen isoliert sein und/oder mit Heizelementen versehen sein. Allfällige Zufuhrleitungen für die Polyesterpartikel können dabei in den Reaktor oder zumindest in die Isolation um den Reaktor eingebunden sein, wodurch sich Wärmeverluste aus der Förderleitung verringern lassen.

Zur Verhinderung von Wärmeverlusten kann der Reaktor nach aussen isoliert sein und/oder mit Heizelementen versehen sein. Allfällige Zufuhrleitungen für die Polyesterpartikel können dabei in den Reaktor oder zumindest in die Isolation um den Reaktor eingebunden sein, wodurch sich Wärmeverluste aus der Förderleitung verringern lassen.

Erfindungsgemäss werden die Polyester-Pre-Polymerpartikel dem Schritt zum Reagieren mit einem Massenstrom von zwischen 40 und 100 Tonnen pro Stunde zugeführt, wobei insbesondere die Polyester Pre-Polymerpartikel einem Reaktor mit einem Massenstrom von zwischen 40 und 100 Tonnen pro Stunde zugeführt werden.

Erfindungsgemäss beträgt die Sinkgeschwindigkeit der Polyesterpartikel im Reaktor mehr als 2.6 bis 6 Meter pro Stunde. Bevorzugt liegt die Sinkgeschwindigkeit über 3 Meter pro Stunde. Die Sinkgeschwindigkeit errechnet sich dabei aus dem Massenstrom der Partikel geteilt durch das Schüttgewicht der Partikel und geteilt durch die durchschnittliche Querschnittsfläche des Reaktors.

Der Produktfluss der Polyester Pre-Polymerpartikel in und aus dem Reaktor wird durch Absperrvorrichtungen, wie Zellradschleusen, Schieber und / oder Fördervorrichtungen reguliert.

Durch die hohe Sinkgeschwindigkeit der Polyesterpartikel im Reaktor entsteht eine verstärkte Relativbewegung der einzelnen Partikel zueinander. Dadurch verringert sich die Klebeneigung der Polyestergranulate, was eine Behandlung bei höheren Temperaturen ermöglicht, wodurch sich wiederum die notwendige Verweilzeit und damit die notwendige Reaktorgrösse verringert. Dabei erklärt sich die geringere Klebeneigung aus der kürzeren Kontaktzeit von jeweils zwei Grenzflächen zweier Partikel, was den temperaturabhängigen grenzflächenüberschreitenden Austausch von frei beweglichen Kettenenden reduziert. Aufgrund der ebenfalls temperaturabhängigen Reaktionsgeschwindigkeit ergibt sich die geringere Verweilzeit für einen bestimmten Anstieg der intrinsischen Viskosität. So kann bei einer gegebenen limitierenden Klebeneigung eines Produktes durch Erhöhen der Sinkgeschwindigkeit die Reaktorgrösse reduziert werden.

Aufgrund der resultierenden Anteile wird ersichtlich, ob die Reaktion mehrheitlich über eine Veresterungsreaktion E/(E+T)) > 0.5 oder mehrheitlich über eine Transesterifikationsreaktion

E/(E+T)) < 0.5 abläuft. Gemäss einer bevorzugten Ausführung der vorliegenden Erfindung, soll die Reaktion zu mehr als 50%, insbesondere zu mehr als 65% und bevorzugt zu mehr als 70%, über eine Veresterungsreaktion ablaufen. Hierzu werden auch allfällige Reaktionen in den vorgängigen Schritten zur Kristallisation und zum Erwärmen einbezogen.

Durch die Bevorzugung der Veresterungsreaktion verringert sich die Klebeneigung eines Produktes, was wiederum den Einsatz höherer Reaktionstemperaturen und somit kleinerer Reaktoren ermöglicht.

Üblicherweise werden die Polyester Pre-Polymerpartikel nach dem Erwärmen durch eine Förderung dem oberen Teil des Reaktors zugeführt.

Gemäss einer Ausführung der vorliegenden Erfindung werden die Polyester Pre-Polymerpartikel von einem Anfangsniveau (H0) auf ein Eintrittsniveau (HR) in den Reaktor gefördert, wobei das Eintrittsniveau (HR) zwischen 40 und 80m, bevorzugt mehr als 45m, insbesondere mehr als 50m, höher als das Anfangsniveau (H0) liegt. Hieraus ergibt sich der Vorteil, dass Vorrichtungen zum Erwärmen auf einem tiefen Gebäudeniveau gebaut werden können und nicht oberhalb vom Reaktor angeordnet sein müssen. Optional können über dem Reaktor ein Pufferbehälter und/oder eine Vorrichtung zur Entstaubung der Polyester Pre-Polymerpartikel angeordnet sein, wobei dann das Eintrittsniveau in den Pufferbehälter und/oder die Entstaubungsvorrichtung das Eintrittsniveau (HR) bestimmt. Erfolgt das Entstauben unter Einwirkung eine Prozessgases, so kann hierdurch eine Erhöhung oder Absenkung der Produkttemperatur erreicht werden, wobei insbesondere Korrekturen im Bereich +/- 20°C erfolgen.

Als Fördervorrichtungen eignen sich mechanische Fördervorrichtungen, wie Schnecken-, Ketten- oder Becherfördervorrichtungen sowie pneumatische Fördervorrichtungen.

Besonders geeignet sind pneumatische Fördervorrichtungen für geringe Fördergeschwindigkeiten, die mit einem Inertgas betrieben werden. Eine pneumatische Fördervorrichtung für geringe Fördergeschwindigkeiten umfasst dabei zumindest ein Vorlagevolumen, dem sowohl Produkt wie auch Fördergas zugeführt wird, eine Vorrichtung zum Druckaufbau für das Fördergas, eine Dosiervorrichtung für das Produkt, eine Förderleitung für die Wegfuhr des Produkt-Gas Gemisches aus dem Vorlagevolumen sowie Ventile zur Regelung der Fördergaszufuhr. Das Vorlagevolumen kann dabei aus einem oder mehreren Behältern oder lediglich aus einem Einlauftrichter in die Förderleitung bestehen. Die Vorrichtung für den Druckaufbau des Fördergases kann dabei einen Verdichter, wie einen Kompressor oder Ventilator, sowie allfällige Puffertanks umfassen. Zusätzlich zum Druckaufbau des Fördergases kann auch ein weiteres Erwärmen des Fördergases erfolgen. Eine Dosiervorrichtung kann Zellradschleusen, Schieber oder Dosierschnecken umfassen. Für einen kontinuierlichen Betrieb sind insbesondere Zellradschleusen bevorzugt, wobei bei Förderungen über grosse Distanzen und somit mit grossen Druckverlusten der Einsatz von zwei nacheinander angeordneten Schleusen vorteilhaft ist, da sich dadurch der Druckabfall über die Förderschleuse reduziert und somit die Menge an Leckagegas verringert wird.

Die Förderleitung kann aus mehreren horizontalen, vertikalen oder schrägen Teilstücken und Rohrbogen bestehen. Rohrbogen sollen dabei Radien aufweisen, die mehr als dem 3-fachen, insbesondere mehr als dem 4-fachen, üblicherweise weniger als dem 10-fachen, des Rohrleitungsdurchmessers entsprechen. Der Durchmesser der Förderleitung kann im Verlauf der Förderstrecke ändern, um zum Beispiel die Ausdehnung des Fördergases mit sinkendem Druck zu kompensieren. Einzelne Teilstücke mit unterschiedlichem Durchmesser sind dabei mit Übergangsstücken verbunden. Durch die Ventile kann die Fördergaszufuhr alternierend vor und hinter das Vorlagevolumen gelenkt werden, um dadurch Produktblöcke zu bilden, die dann durch die Förderleitung geschoben werden.

Gemäss einer bevorzugten Ausführungsform der vorliegenden Erfindung erfolgt die Förderung der erwärmten Polyester Pre-Polymerpartikel durch zwei oder mehrere Förderleitungen. Dadurch kann einerseits die Durchsatzleistung durch eine Förderleitung begrenzt werden. Andererseits kann eine parallele Förderleitung als back-up Leitung vorgesehen sein, um allfällige Produktionsausfälle, ausgelöst durch den Stillstand in einer Förderleitung, zu verhindern. Jeder Förderleitung können Vorrichtungen zum Druckaufbau und zur Dosierung sowie Ventile zugeordnet sein. Es besteht jedoch auch die Möglichkeit eine Vorrichtung zum Druckaufbau und/oder zum Erwärmen des Fördergases mit zwei oder mehreren Förderleitungen zu verbinden.

Die Fördergastemperatur wird so gewählt, dass sich die Temperatur der Polyester Pre-Polymerpartikel in der Förderung nicht wesentlich verändert, insbesondere um weniger als +/-10°C verändert, wobei insbesondere ein Temperaturanstieg vermieden werden soll. Üblicherweise werden Fördergastemperaturen in einem Bereich zwischen 60°C und 250°C, bevorzugt über 100°C und unter 230°C, insbesondere über 150°C, verwendet.

Gemäss einer bevorzugten Ausführungsform der vorliegenden Erfindung erfolgt die Förderung der erwärmten Polyester Pre-Polymerpartikel bei einer Fördertemperatur (TF), wobei TF zwischen 5 und 80°C, insbesondere mehr als 20°C und weniger als 60°C, unter dem kristallinen Schmelzpunkt des Polyesters liegt. Bei der Herstellung von Polyethylenterephthalat liegt die Fördertemperatur (TF) bevorzugt zwischen 190°C und 230°, insbesondere über 200°C und unter 225°C. Als Fördertemperatur wird dabei die Temperatur der Polyester Pre-Polymerpartikel am Ende der Förderstrecke bezeichnet.

Gemäss einer bevorzugten Ausführungsform der vorliegenden Erfindung erfolgt die Förderung der erwärmten Polyester Pre-Polymerpartikel durch eine Förderleitung mit einem Innendurchmesser (DF), wobei DF zwischen 250mm und 500mm, insbesondere über 290mm und unter 450mm beträgt. Die Förderleitung weist dabei üblicherweise einen runden Querschnitt auf. DF entspricht bei einem runden Querschnitt dem freien Querschnittsdurchmesser, bei einem anderen Querschnitt der Wurzel aus der freien Querschnittsfläche.

Gemäss einer weiteren bevorzugten Ausführungsform der vorliegenden Erfindung erfolgt die Förderung der erwärmten Polyester Pre-Polymerpartikel bei einer Fördergeschwindigkeit (vF), wobei vF zwischen 5 und 12 m/s beträgt. Als Fördergeschwindigkeit wird dabei die Leerrohrgeschwindigkeit des Fördergases bei den gegebenen Betriebsbedingungen im Teilstück am Ende der Förderstrecke bezeichnet, wobei die Leerrohrgeschwindigkeit der Gasmenge pro Zeit geteilt durch den Querschnitt der Förderleitung entspricht. Durch die geringe Fördergeschwindigkeit in Rohrleitungen mit relativ grossem Durchmesser wird eine übermässige Staubbildung durch Abrieb verhindert.

Die Fördergasmasse beträgt dabei bevorzugterweise zwischen 3% und 15%, insbesondere weniger als 10%, bezogen auf die geförderte Produktmasse.

Die Förderleitung kann direkt im Reaktor oder in einem darüber angeordneten Abscheider enden. Der Eintritt in den Reaktor kann von oben durch den Deckel oder durch den oberen Bereich des Reaktormantels erfolgen. Wenn zwei oder mehrere Förderleitungen verwendet werden, so kann der Eintritt in den Reaktor über eine gemeinsame Leitung oder über getrennte Leitungen erfolgen, wobei getrennte Eintritte, die entweder unterschiedlich gerichtet sind oder voneinander entfernt liegen, bevorzugt sind, da dadurch die Partikel im Reaktor verteilt werden, was zu einer besseren Ausnutzung des Reaktorvolumens führt.

Das Fördergas wird im Reaktor oder im Abscheider von den Polyester Pre-Polymerpartikeln getrennt und entweder direkt zur Förderung zurückgeführt oder mit einem anderen Inertgasstrom vermischt. Üblicherweise wird das Fördergas vor einer Weiterverwendung zumindest von Polykondensatstaub gereinigt.

Zusätzlich zu der Förderung zwischen dem Erwärmen und dem Reagieren können weitere Förderungen zum Einsatz kommen. Insbesondere können Förderungen zwischen der Partikelherstellung und der Kristallisation, zwischen mehreren Schritten der Kristallisation, zwischen der Kristallisation und dem Erwärmen, zwischen dem Reagieren und dem Kühlen, nach dem Kühlen sowie zwischen einem Prozessschritt und einem allfälligen Lagersilo verwendet werden.

Es ist insbesondere erfindungsgemäss bevorzugt, eine Förderung zwischen der Kristallisation und der Vorerhitzen (Erwärmen) vorzusehen. In einer herkömmlichen Anlage zur Durchführung einer Festphasenpolykondensation (SSP) ist der Kristallisator oberhalb des Vorerhitzers angeordnet. Bei einer grossen Anlage wie sie Gegenstand der vorliegenden Erfindung ist, wäre dadurch aber ein sehr grosser Prozessschritt in einem oberen bereich der Anlage (d.h. sehr weit oben im Anlagengebäude) angeordnet). Dies ist sehr kostspielig. Es ist daher erfindungsgemäss bevorzugt, den Kristallisator neben dem Vorerhitzer anzuordnen (d.h. in einem unteren Bereich des Gebäudes). Dies bedingt eine Förderung der teilkristallisierten Prepolymer-Partikel aus dem Auslass am unteren Ende des Kristallisators in den Einlass am oberen Ende des Vorerhitzers. Hinsichtlich der Einzelheiten dieser Förderung (Förderhöhe, Förderleitungen usw.) kann auf die vorstehenden Ausführungen zur Förderung in den Reaktor verwiesen werden. Vorzugsweise können bei der Förderung zwischen Kristallisator und Vorerhitzer die gleichen Massnahmen ergriffen werden.

Es hat sich dabei jedoch unerwartet gezeigt, dass es bei einer Anordnung des Kristallisators und Vorerhitzers nebeneinander im unteren Bereich der Anlage und der damit verbundenen Förderung im Gegensatz zu herkömmlichen SSP-Anlagen zu unerwünschter Staubbelastung im Vorerhitzer kommt. Die Staubbelastung führt zur Bildung von schwer aufschmelzbaren Partikeln im Vorerhitzer und einer dadurch bedingten sehr kostspieligen Reinigung des Vorerhitzers nach einer gewissen Laufzeit der Anlage.

Überraschend wurde gefunden, dass dieses Problem auf einfache und kostengünstige Weise überwunden werden kann, wenn man am Ende der Förderstrecke zwischen Kristallisator und Vorerhitzer, vorzugsweise oberhalb des Einlasses in den Vorerhitzer, eine Entstaubungsvorrichtung anordnet.

Als Staub werden Partikel mit einer Grösse, die deutlich unter dem mittleren Granulatdurchmesser liegt, bezeichnet. Ist der mittlere Granulatdurchmesser über 1 mm, so gelten Partikel, die durch ein Sieb mit 500 $\mu$m Maschenweite fallen, als Staub.

Staub kann durch mechanische Energie zum Beispiel in Rüttelsieben, Prallabscheidern oder Zick-zack-Abscheidern oder durch einen Gasfluss zum Beispiel in Fliessbettapparaten oder Windsichtern abgetrennt werden. Zur Entfernung von Staubpartikeln, die durch elektrostatische Kräfte an Granulaten anhaften, können entionisierende Gasströme verwendet werden. Bevorzugte Entstaubungsvorrichtungen sind Wirbelbett oder Fliessbettapparate mit einer gasdurchströmten Siebfläche von 0.5 bis 10 $m^2$, insbesondere grösser 1 $m^2$ und kleiner 8 $m^2$, wobei ein Verhältnis von Gasmenge zu Produktmenge von 1:15 bis 1:1 eingesetzt wird. Die mittlere Verweilzeit der Granulate in einer Entstaubungsvorrichtung liegt im Bereich weniger Sekunden bis 5 Minuten, wobei in Ausnahmefällen auch längere Verweilzeiten denkbar sind. Die Entstaubung erfolgt bei einer Temperatur, die im Wesentlichen dem geeigneten Temperaturbereich zur Kristallisation entspricht.

Erfindungsgemäss bevorzugt umfasst daher das vorliegende Verfahren den Schritt der Behandlung eines (teilkristallinen) Polyesters in einem Fliessbettapparat bei einer Temperatur im Bereich von 100 bis 250°C, insbesondere 130 bis 200°C, mit einer spezifischen Durchsatzleistung von 10 bis 100 t/h pro m$^2$ Siebfläche, insbesondere grösser als 15 t/h pro m$^2$ Siebfläche. Durch diesen Schritt wird überraschend eine effiziente Entstaubung der teilkristallinen Prepolymer-Partikel und somit ein erheblich effizienterer Betrieb der gesamten Anlage erreicht.

Fliessbettapparate sind im Stand der Technik bekannt und zum Beispiel in der bereits erwähnten Schrift EP-1 425 146 A2 beschrieben. Die Apparate weisen zumindest eine Zuführöffnung für die zu entstaubenden Partikel und zumindest eine Austrittsöffnung für die entstaubten Partikel auf. Weiter weisen sie zumindest eine Eintrittsöffnung für das zur Entstaubung verwendete Prozessgas und zumindest eine Austrittsöffnung für das staubbeladene Prozessgas auf. Ein Siebblech, das vom Prozessgas durchströmt werden kann, nicht aber von den Partikeln durchströmt werden kann ist zwischen der zumindest einen Partikeleintrittsöffnung und der zumindest einen Gaseintrittsöffnung derart angeordnet, dass die Partikel vom Prozessgas durchströmt und fluidisiert, insbesondere verwirbelt werden. Zur Entstaubung geeignete Gasgeschwindigkeiten liegen im Bereich von 2 bis 5 m/s Leerrohrgeschwindigkeit, wobei bei pulsierenden Gasströmen die maximale Gasgeschwindigkeit ausschlaggebend ist.

Im Anschluss an das Reagieren kann ein Schritt zum Kühlen der Polyester Polymerpartikel erfolgen.

Die Polyester Polymerpartikel können dabei auf eine zur Lagerung und zum Transport geeignete Temperatur oder auf eine Temperatur zur direkten Weiterverarbeitung abgekühlt werden. Die Kühlung erfolgt dabei durch im Stand der Technik bekannte Verfahren, zum Beispiel in Plattenwärmetauschern, in Fliessbettkühlern, in Förderanlagen mit einem Überschuss an Kühlmedium, durch direkten Eintrag in eine Kühlflüssigkeit, durch Kontakt mit einer kalten Oberfläche oder durch Kombination verschiedener Kühlmethoden. Ein Teil der Kühlung kann bereits im Reaktor durch Zugabe eines kalten Gasstromes erfolgen. Bevorzugte Kühlvorrichtungen sind Fliessbettkühler oder Kühlreaktoren, durch die ein Gasstrom im Gegenstrom geführt wird.

Die Polyester Polymerpartikel können zu verschiedenen Produkten wie zum Beispiel Fasern, Bändern, Folien oder Spritzgussteilen verarbeitet werden. Polyethylenterephthalat wird insbesondere zu Hohlkörpern, wie zum Beispiel Flaschen verarbeitet.

Die vorliegende Erfindung bezieht sich auf ein Verfahren zur Herstellung von Polyesterpartikeln bei hohem Durchsatz in einer Linie. Da sich einzelne Prozessschritte oder Teilprozessschritte sowohl in einer einzelnen Vorrichtung, wie auch in mehreren parallel betriebenen Vorrichtungen durchführen lassen, wird die Durchsatzleistung einer Linie durch den Durchsatz der Vorrichtung mit der höchsten Durchsatzleistung bestimmt. Gemäss einer bevorzugten Ausführungsform der vorliegenden Erfindung erfolgt zumindest ein Schritt der Kristallisation, des Erwärmens oder der Reaktion in einer einzelnen Vorrichtung mit einem Massenstrom von zwischen 40 und 100 Tonnen pro Stunde.

Weitere vorteilhafte Ausführungsformen sind in den Unteransprüchen definiert.

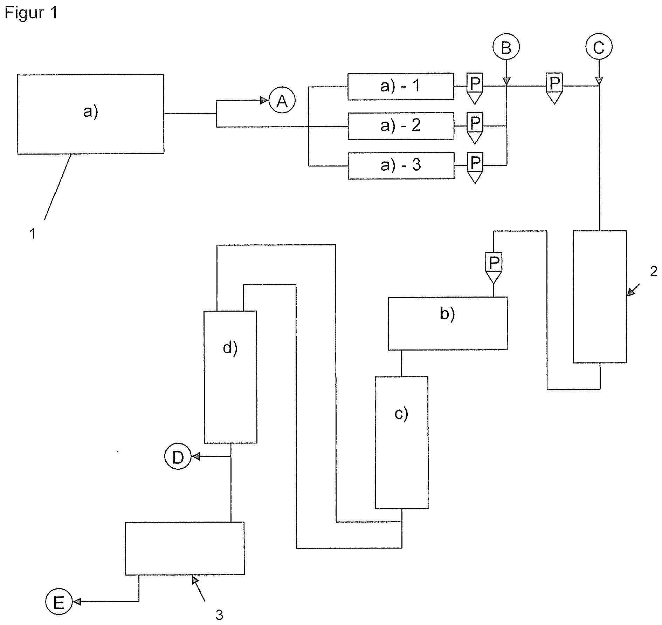

Eine Ausführungsform des erfindungsgemässen Verfahrens ist in Figur 1 dargestellt. In einem Schmelzepolymerisationsreaktor a) wird eine Polykondensat Pre-Polymerschmelze 1 bestehend aus Polyethylenterephthalat mit einem IV Wert von 0.60 dl/g und einem Co-Monomeranteil von ca. 6% (mol% bezogen auf die jeweilige Monomerkomponente) mit einer Produktionsleistung von 62.6 t/h hergestellt. Die Schmelzetemperatur beträgt ca. 285°C. Die Schmelze wird in eine Vielzahl von Schmelzeleitungen aufgeteilt und einer Vielzahl an Granulatoren zugeführt, wobei nur die Granulatoren a) - 1 bis a) - 3 gezeigt sind. Weitere Granulatoren sind mit Punkt (A) verbunden. Bei den Granulatoren handelt es sich um handelsübliche Unterwasser Strang Granulatoren, wie sie zum Beispiel von der Firma Automatik Plastics Machinery unter der Bezeichnung USG vertrieben werden. Die Granulatoren bestehen aus einer Düse mit einer Düsenplatte zur Erzeugung einer Vielzahl an Schmelzesträngen, einem mit Wasser überströmten Aufnahmebereich für die Schmelzestränge, der von der Düse zwischen 1 mm und 300mm beabstandet ist, einer geneigten mit Wasser besprühten Rutsche, auf der die Schmelzestränge abgekühlt und verfestigt werden, einer Schneideinrichtung inklusive Einzugswalzen und Schneidwalzen, in der die Stränge zu einzelnen Granulaten geschnitten werden, einer Wasseraufbereitung in der das Kühlwasser auf 30 bis 50°C temperiert und gefiltert wird, einer Trocknungsvorrichtung, in der die Granulate vom Prozesswasser getrennt werden, und einem Klassiersieb, in dem Übergrössen und/oder Feinteile entfernt werden. Die hergestellten Granulate haben eine zylindrische Form, sind ca. 3mm lang, haben einen Durchmesser von ca. 2.4mm und haben ein Gewicht von ca. 18mg. Die Granulattemperatur beträgt ca. 50°C. Optional kann anschliessend an jeden Granulator ein Pufferbehälter (P), oder ein Pufferbehälter (P) für mehrere Granulatoren, angeordnet sein. Durch eine oder mehrere pneumatische Förderungen werden die Granulate in ein oder mehrere Lagersilos 2 gefördert, wobei der Produktstrom von Punkt (A) im Punkt (B) oder (C) zugeführt wird. Aus den Lagersilos 2 erfolgt wiederum über eine oder mehrere pneumatische Förderungen ein Transport der Pre-Polymerpartikel in einen optionalen Pufferbehälter (P) und anschliessend in einen Kristallisator b). Je nach Aussentemperatur und optionaler Vorbehandlung kann die Eintrittstemperatur in den Kristallisator zwischen -20 und 90°C betragen. Der Eintrag der Partikel in den Kristallisator erfolgt dosiert über eine Zellradschleuse. Die Behandlung im Kristallisator erfolgt unter Luft. Im Kristallisator werden die Partikel in mehreren Kammern durch ein heisses Fluidisationsgas in 5 bis 20 Minuten auf eine Temperatur von ca. 165°C erhitzt und dabei auf einen Kristallisationsgrad von ca. 35% kristallisiert. Durch eine oder mehrere weitere optionale Förderungen gelangen die kristallisierten Partikel in einen Vorerhitzer c), der unter Stickstoff betrieben wird. Ebenfalls optional kann vor dem Vorerhitzer mindestens eine Entstaubungsvorrichtung angeordnet sein. Wird die Entstaubungsvorrichtung mit einem heissen Fluidisationsgas betrieben, erfolgt gleichzeitig eine Temperaturerhöhung zwischen 1 und 20°C. Zwischen Kristallisator und Vorerhitzer ist wenigstens eine Zellradschleuse angeordnet, um einen übermässigen Stickstoffübertrag zu verhindern. Im Vorerhitzer werden die Partikel mit einem heissen Prozessgasstrom in ca. 30 bis 120 Minuten auf eine Temperatur von ca. 216°C erhitzt, wobei vor dem Austritt eine Temperaturreduktion um 1 - 10°C erfolgt. Der Kristallisationsgrad der Partikel steigt dabei auf ca. 44% an. Der IV Wert steigt auf ca. 0.63 dl/g.

Die heissen Partikel werden nach dem Austritt aus dem Vorerhitzer in zwei Produktströme von je ca. 31.3 t/h aufgeteilt. Es erfolgen zwei parallele pneumatische Heissförderung unter Stickstoff, wobei je 2.2 t/h Fördergas mit einer Temperatur von 200°C verwendet werden. Die Förderung überwindet dabei von tiefsten zum höchsten Punkt ca. 55m Höhenunterschied. Im Verlauf der Förderstrecke nimmt der Rohrleitungsinnendurchmesser von 180mm auf 280mm zu, wobei der massgebliche Rohrleitungsinnendurchmesser am Ende der Förderstrecke 280mm beträgt. Die Fördergeschwindigkeit wird dadurch im Bereich zwischen 7 und 11 m/s konstant gehalten, wobei die massgebliche Fördergeschwindigkeit am Ende der Förderstrecke 11 m/s beträgt. Die durchschnittliche Fördertemperatur beträgt 212°C. Die Förderungen münden direkt in den Reaktor d), wobei durch einen Abstand zwischen den Förderleitungen beim Reaktoreintritte zwei Schüttkegel erzeugt werden, was zu einer besseren Ausnutzung des Reaktorvolumens führt.

Dem Reaktor werden somit 62.6 t/h an Pre-Polymerpartikel zugeführt. Der Reaktor hat ein Volumen von 687m³ und eine zylindrische Höhe von 35m. Die Verweilzeit im Reaktor beträgt ca. 9 Stunden. Dem Reaktor wird von unten sauberer Stickstoff mit ca. 170°C zugeführt. Das Verhältnis Gasmenge zu Produktmenge beträgt 1 zu 3.2. Der Druckabfall über den Reaktor beträgt ca. 700mbar. Die Sinkgeschwindigkeit der Partikel im Reaktor beträgt 3.9 m/h. Durch die Behandlung im Reaktor steigt die intrinsische Viskosität auf einen Wert von 0.86 dl/g. Die Polymerpartikel im Punkt (D) können direkt im trockenen und heissen Zustand zur Weiterverarbeitung, zum Beispiel zu Prefroms für PET Flaschen, verwendet werden. Unter dem Reaktor ist ein Kühler 3 angeordnet, in dem die Polymerpartikel im Gegenstrom mit Luft gekühlt werden. Nach dem Kühlen werden die Polymerpartikel ausgehend vom Punkt (E) in Lagersilos 2 oder Transportbehälter gefördert.

Der Stickstoff aus dem Reaktor wird zunächst als Austauschgas im Vorerhitzer verwendet und anschliessend mittels eines mit Ethylenglykol betriebenen Gaswäschers von flüchtigen Komponenten wie Ethylenglykol, Wasser und Acetaldehyd in mehreren Stufen gereinigt und dabei auf unter 10°C abgekühlt. Der verbleibende Wassergehalt beträgt ca. 15ppm, der Ethylenglykolgehalt ca. 25ppm und der Acetaldehydgehalt ca. 75ppm. Sauerstoff der mit dem Polymer oder über die Zellradschleusen in die Anlage eindringt, wird aus einem Teilstrom des Stickstoffs durch katalytische Verbrennung bei 200 bis 350°C entfernt. Als Brennstoff dient dazu das im Gasstrom verbleibende Acetaldehyd, dessen Gehalt dadurch weiter reduziert wird. Gereinigter Stickstoff wird wieder als Frischgas für den Reaktor, als Kühlgas am Ende des Vorerhitzers sowie als Fördergas vom Vorerhitzer zum Reaktor verwendet.

Die heisse Abluft vom Kühler wird über einen Zyklon von allfälligen Staubresten gereinigt und anschliessend als Austauschgas in den Kristallisationsgaskreislauf geführt, wodurch sich die Energiemenge zum Aufheizen des Austauschgases einsparen lässt.

**Patentansprüche**

1. Verfahren zur Herstellung eines thermoplastischen Polyesters mit den folgenden Schritten :

   a) Herstellen von Polyester Pre-Polymerpartikeln mit einer intrinsischen Viskosität zwischen 0.35 und 0.75 dl/g,
   b) Kristallisieren der Polyester-Pre-Polymerpartikel zur Herstellung von teilkristallinen Polyester-Pre-Polymerpartikeln,
   c) Vorerhitzen der teilkristallinen Polyester Pre-Polymerpartikel auf eine geeignete Reaktionstemperatur zur Herstellung von erwärmten Polyester-Pre-Polymerpartikeln,
   d) Reagieren der erwärmten Polyester Pre-Polymerpartikel zur Herstellung von Polyester Polymerpartikeln mit einer intrinsischen Viskosität zwischen 0.70 und 0.95 dl/g, wobei der Anstieg der intrinsischen Viskosität zumindest 0.05, insbesondere zumindest 0.1dl/g beträgt,

   wobei die Reaktion in Schritt d) in wenigstens einem Reaktor stattfindet, den die Partikel mittels Schwerkraft durchfliessen,
   wobei die Verweilzeit im Reaktor zwischen 6 und 30 Stunden beträgt, wobei die intrinsische Viskosität (I.V.) durch Messung der relativen Viskosität (R.V.) einer Polyesterprobe mit einer Konzentration von 0.5% (0.5g/dl) in einer Mischung aus Phenol/Dichlorbenzol (50 : 50 Gew.%) bei 25°C mit einem Ubbelohde-Viskosimeter (nach DIN Anweisung Nr. 53728, Teil 3 vom Januar 1985) anhand der Gleichung $I.V. = \dfrac{\sqrt{1+1.4(R.V.-1)}-1}{0.35}$ (dl/g) ermittelt wird,

**dadurch gekennzeichnet, dass**

die Partikel (1) zumindest dem Schritt d) mit einem Massenstrom von zwischen 40 und 100 Tonnen pro Stunde zugeführt werden und

eine Sinkgeschwindigkeit der Partikel im Reaktor mehr als 2.6 bis 6 Meter pro Stunde beträgt.

2. Verfahren gemäss Anspruch 1, **dadurch gekennzeichnet, dass** die Reaktion in Schritt d) in einem Inertgasstrom erfolgt, wobei Reaktionsprodukte der molekulargewichtserhöhenden Reaktionen von den Partikeln ins Gas übertragen werden und eine Druckdifferenz zwischen dem Gaseinlass in den Reaktor und dem Gasauslass aus dem Reaktor zwischen 450 und 1000mbar beträgt.

3. Verfahren gemäss einem der vorhergehenden Ansprüche, **dadurch gekennzeichnet, dass** die Polyester-Pre-Polymerpartikel zwischen dem Schritt b) der Kristallisation und dem Schritt c) der Vorerhitzung von einem Austrittsniveau (HA) auf ein höher liegendes Eintrittsniveau (HE) gefördert werden.

4. Verfahren gemäss einem der vorhergehenden Ansprüche, **dadurch gekennzeichnet, dass** die Polyester-Pre-Polymerpartikel vor Schritt c) durch eine Entstaubungsvorrichtung geführt werden.

5. Verfahren gemäss einem der vorhergehenden Ansprüche, **dadurch gekennzeichnet, dass** die Polyester-Pre-Polymerpartikel aus Schritt a) einen Carboxylendgruppengehalt ($X_{COOH}$) zwischen 0.25 und 0.6 aufweisen und dass währen der Behandlung in den Schritten b), c) und d) der Anteil der Veresterungsreaktion (E) an den Polykondensationsreaktionen (E+T) zwischen 0.5 und 1 liegt.

6. Verfahren gemäss einem der vorhergehenden Ansprüche, **dadurch gekennzeichnet, dass** die erwärmten Polyester-Pre-Polymerpartikel aus Schritt c) von einem Anfangsniveau (H0) auf ein Eintrittsniveau (HR) in den Reaktor gefördert werden und das Eintrittsniveau (HR) zwischen 40 und 80m höher als das Austrittsniveau H0 liegt.

7. Verfahren gemäss einem der vorhergehenden Ansprüche, **dadurch gekennzeichnet, dass** die Förderung der erwärmten Polyester-Pre-Polymerpartikel aus Schritt c) bei einer Fördertemperatur (TF) erfolgt, die bevorzugt zwischen 5 und 80°C unter dem kristallinen Schmelzpunkt des Polyesters liegt

8. Verfahren gemäss einem der vorhergehenden Ansprüche, **dadurch gekennzeichnet, dass** die Förderung der erwärmten Polyester Pre-Polymerpartikel aus Schritt c) mittels einer pneumatischen Förderung erfolgt.

9. Verfahren gemäss einem der vorhergehenden Ansprüche, **dadurch gekennzeichnet, dass** die Förderung der erwärmten Polyester Pre-Polymerpartikel aus Schritt c) durch eine Förderleitung mit einem Innendurchmesser (DF) erfolgt, wobei der Innendurchmesser (DF) zwischen 250mm und 500mm beträgt.

10. Verfahren gemäss einem der vorhergehenden Ansprüche, **dadurch gekennzeichnet, dass** die Förderung bei einer Fördergeschwindigkeit (vF) erfolgt, die zwischen 5 und 12 m/s beträgt.

11. Verfahren gemäss einem der vorhergehenden Ansprüche, **dadurch gekennzeichnet, dass** die Förderung der erwärmten Polyester Pre-Polymerpartikel aus Schritt c) durch wenigstens zwei Förderleitungen erfolgt.

12. Verfahren gemäss einem der vorhergehenden Ansprüche, **dadurch gekennzeichnet, dass** die Partikel zumindest einer einzelnen Vorrichtung der Schritte b), c) oder d) mit einem Massenstrom von zwischen 40 und 100 Tonnen pro Stunde zugeführt werden.

13. Vorrichtung zur Herstellung eines thermoplastischen Polyesters gemäss einem der Ansprüche 1 bis 12, umfassend

a) einen Schmelzpolykondensationsreaktor a) zum Herstellen von Polyester-Pre-Polymerpartikeln mit einer intrinsischen Viskosität zwischen 0.35 und 0.75 dl/g
b) mindestens einen Kristallisator b) zum Kristallisieren der Polyester-Pre-Polymerpartikel zur Herstellung von teilkristallinen Polyester-Pre-Polymerpartikeln
c) mindestens einen Vorerhitzer c) zum Erwärmen der teilkristallinen Polyester Pre-Polymerpartikel auf eine geeignete Reaktionstemperatur zur Herstellung von erwärmten Polyester-Pre-Polymerpartikeln
d) mindestens einen Reaktor d) zur Herstellung von Polyester-Polymerpartikeln mit einer intrinsischen Viskosität zwischen 0.70 und 0.95 dl/g, wobei der Anstieg der intrinsischen Viskosität zumindest 0.05, insbesondere zumindest 0.1dl/g beträgt, wobei die intrinsische Viskosität (I.V.) durch Messung der relativen Viskosität (R.V.) einer Polyesterprobe mit einer Konzentration von 0.5% (0.5g/dl) in einer Mischung aus Phenol/Dichlorbenzol (50 : 50 Gew.%) bei 25°C mit einem Ubbelohde-Viskosimeter (nach DIN Anweisung Nr. 53728, Teil 3 vom Januar 1985) anhand der Gleichung $I.V. = \dfrac{\sqrt{1+1.4(R.V.-1)}-1}{0.35}$ (dl/g) ermittelt wird,

**dadurch gekennzeichnet, dass** vor dem Vorerhitzer c) eine Entstaubungsvorrichtung angeordnet ist, das Eintrittsniveau (HR) in den Reaktor d) zwischen 40 und 80m höher als das Austrittsniveau H0 aus dem Vorerhitzer c) liegt.

14. Vorrichtung nach Anspruch 13, **dadurch gekennzeichnet, dass** der Reaktor d) mit einem Massenstrom von zwischen 40 und 100 Tonnen Partikel pro Stunde, einer Verweilzeit der Partikel im Reaktor d) zwischen 6 und 30 Stunden und einer Sinkgeschwindigkeit der Partikel im Reaktor d) von mehr als 2.6 bis 6 Meter pro Stunde betrieben werden kann.

15. Vorrichtung nach einem der Ansprüche 13 bis 14, **dadurch gekennzeichnet, dass** der Vorerhitzer c) und der Reaktor d) über mindestens zwei Förderleitungen miteinander verbunden sind.

16. Vorrichtung gemäss einem der Ansprüche 13 bis 15, **dadurch gekennzeichnet, dass** die Förderleitungen getrennt in den Reaktor d) eingeführt sind, wobei die Eintritte unterschiedlich gerichtet sind oder weit voneinander entfernt angeordnet sind.

17. Vorrichtung gemäss einem der Ansprüche 13 bis 16, **dadurch gekennzeichnet, dass** Förderleitungen der Innendurchmesser (DF) zwischen 250mm und 500mm aufweisen.

18. Vorrichtung gemäss einem der Ansprüche 13 bis 17, **dadurch gekennzeichnet, dass** der Kristallisator b) und der Vorerhitzer c) nebeneinander angeordnet und durch eine Förderleitung miteinander verbunden sind.

19. Verfahren zur Entstaubung von teilkristallinen Polyester-Pre-Polymerpartikeln, **dadurch gekennzeichnet, dass** die Entstaubung in einem Fliessbettapparat bei einer Temperatur im Bereich von 100 bis 250°C, insbesondere 130 bis 200°C, mit einer spezifischen Durchsatzleistung von 10 bis 100 t/h pro m$^2$ Siebfläche, insbesondere grösser als 15 t/h pro m$^2$ Siebfläche erfolgt.

## Claims

1. A process for producing a thermoplastic polyester with the following steps:

   a) producing polyester prepolymer particles with an intrinsic viscosity of from 0.35 to 0.75 dl/g,
   b) crystallizing the polyester prepolymer particles to produce semicrystalline polyester prepolymer particles,
   c) preheating the semicrystalline polyester prepolymer particles to a suitable reaction temperature for producing heated polyester prepolymer particles,
   d) reacting the heated polyester prepolymer particles to produce polyester polymer particles with an intrinsic viscosity of from 0.70 to 0.95 dl/g, wherein the increase in intrinsic viscosity is at least 0.05, in particular at least 0.1dl/g,

   where the reaction in step d) takes place in at least one reactor through which the particles flow under gravity, where the residence time in the reactor is from 6 to 30 hours, wherein the intrinsic viscosity (I.V.) is determined by measurement of the relative viscosity (R.V.) of a polyester sample having a concentration of 0.5% (0.5g/dl) in a mixture of phenol/dichlorobenzene (50 : 50 wt.%) at 25°C with an Ubbelohde viscosimeter (according to DIN instruction no. 53728, part 3 from January 1985) according to the equation

   $$I.V. = \frac{\sqrt{1+1.4(R.V.-1)}-1}{0.35} \quad (dl/g),$$

   **characterized in that**
   the particles (1) are introduced at least into the step d) with a mass flow rate of from 40 to 100 metric tons per hour, and

a descent velocity of from more than 2.6 to 6 meters per hour applies to the particles in the reactor.

2. The process as claimed in claim 1, **characterized in that** the reaction in step d) takes place in a stream of inert gas, where reaction products from the reactions which increase the molecular weight of the particles are transferred into the gas, and there is a pressure difference of from 450 to 1000 mbar between the gas inlet into the reactor and the gas outlet from the reactor.

3. The process as claimed in either of the preceding claims, **characterized in that,** between the step b) of the crystallization process and the step c) of the preheating process, the polyester prepolymer particles are conveyed from an output level (HA) to an input level (HE) which is at a higher location.

4. The process as claimed in any of the preceding claims, **characterized in that,** prior to step c), the polyester prepolymer particles are passed through a dust-removal apparatus.

5. The process as claimed in any of the preceding claims, **characterized in that** the terminal carboxyl group content ($X_{COOH}$) of the polyester prepolymer particles from step a) is from 0.25 to 0.6, and that, during the treatment in steps b), c), and d), the proportion of the esterification reaction (E) in the polycondensation reactions (E + T) is from 0.5 to 1.

6. The process as claimed in any of the preceding claims, **characterized in that** the heated polyester prepolymer particles from step c) are conveyed into the reactor from an initial level (H0) to an input level (HR), and the input level (HR) is at a location higher by from 40 to 80 m than the output level H0.

7. The process as claimed in any of the preceding claims, **characterized in that** the conveying of the heated polyester prepolymer particles from step c) takes place at a conveying temperature (TF) which is preferably below the crystalline melting point of the polyester by from 5 to 80°C.

8. The process as claimed in any of the preceding claims, **characterized in that** the conveying of the heated polyester prepolymer particles from step c) is achieved by means of a pneumatic conveying system.

9. The process as claimed in any of the preceding claims, **characterized in that** the conveying of the heated polyester prepolymer particles from step c) takes place via a conveying line with an internal diameter (DF) of from 250 mm to 500 mm.

10. The process as claimed in any of the preceding claims, **characterized in that** the conveying takes place at a conveying velocity (vF) which is from 5 to 12 m/s.

11. The process as claimed in any of the preceding claims, **characterized in that** the conveying of the heated polyester prepolymer particles from step c) takes place via at least two conveying lines.

12. The process as claimed in any of the preceding claims, **characterized in that** the particles are introduced at least into one individual apparatus of the steps b), c) or d) with a mass flow rate of from 40 to 100 metric tons per hour.

13. An apparatus for producing a thermoplastic polyester as claimed in any of claims 1 to 12, comprising

a) a melt polycondensation reactor a) for producing polyester prepolymer particles with an intrinsic viscosity of from 0.35 to 0.75 dl/g
b) at least one crystallizer b) for crystallizing the polyester prepolymer particles to produce semicrystalline polyester prepolymer particles
c) at least one preheater c) for heating the semicrystalline polyester prepolymer particles to a suitable reaction temperature for producing heated polyester prepolymer particles
d) at least one reactor d) for producing polyester polymer particles with an intrinsic viscosity of from 0.70 to 0.95 dl/g, wherein the increase in intrinsic viscosity is at least 0.05, in particular at least 0.1dl/g, wherein the intrinsic viscosity (I.V.) is determined by measurement of the relative viscosity (R.V.) of a polyester sample having a concentration of 0.5% (0.5g/dl) in a mixture of phenol/dichlorobenzene (50 : 50 wt.%) at 25°C with an Ubbelohde viscosimeter (according to DIN instruction no. 53728, part 3 from January 1985) according to the equation

$$I.V. = \frac{\sqrt{1 + 1.4(R.V. - 1)} - 1}{0.35} \quad \texttt{(dl/g)},$$

**characterized in that,**
prior to the preheater c), there is provided a dust-removal apparatus, and
the level of input (HR) into the reactor d) is at a location higher by from 40 to 80 m than the level of output H0 from the preheater c).

**14.** The apparatus as claimed in claim 13, **characterized in that** the reactor d) can be operated with a mass flow rate of from 40 to 100 metric tons of particles per hour, with a residence time of the particles in the reactor d) of from 6 to 30 hours, and with a descent velocity of from more than 2.6 to 6 meters per hour for the particles in the reactor d).

**15.** The apparatus as claimed in any of claims 13 to 14, **characterized in that** there are at least two conveying lines connecting the preheater c) and the reactor d) to one another.

**16.** The apparatus as claimed in any of claims 13 to 15, **characterized in that** the conveying lines are introduced separately into the reactor d), wherein the inlets are in different directions or are provided at a great distance from one another.

**17.** The apparatus as claimed in any of claims 13 to 16, **characterized in that** conveying lines have internal diameters (DF) of from 250 mm to 500 mm.

**18.** The apparatus as claimed in any of claims 13 to 17, **characterized in that** the crystallizer b) and the preheater c) are provided alongside one another, and are connected by a conveying line.

**19.** A process for dust-removal from semicrystalline polyester prepolymer particles, **characterized in that** the dust-removal process takes place in a fluidized-bed apparatus at a temperature in the range from 100 to 250°C, in particular from 130 to 200°C, with a specific throughput rate of from 10 to 100 metric tons/h per m$^2$ of sieve area, in particular greater than 15 metric tons/h per m$^2$ of sieve area.

**Revendications**

**1.** Procédé pour la préparation d'un polyester thermoplastique, comprenant les étapes suivantes, consistant à :

a) préparer des particules de prépolymère de polyester présentant une viscosité intrinsèque entre 0,35 et 0,75 dl/g,
b) cristalliser les particules de prépolymère de polyester pour préparer des particules de prépolymère de polyester partiellement cristallines,
c) préchauffer les particules de prépolymère de polyester partiellement cristallines à une température de réaction appropriée pour préparer des particules de prépolymère de polyester chauffées,
d) faire réagir les particules de prépolymère de polyester chauffées pour préparer des particules de polymère de polyester présentant une viscosité intrinsèque entre 0,70 et 0,95 dl/g, l'augmentation de la viscosité intrinsèque étant d'au moins 0,05, en particulier d'au moins 0,1 dl/g,

la réaction dans l'étape d) ayant lieu dans au moins un réacteur au travers duquel les particules s'écoulent par gravité, le temps de séjour dans le réacteur étant situé entre 6 et 30 heures, la viscosité intrinsèque (I.V.) étant déterminée par mesure de la viscosité relative (R.V.) d'un échantillon de polyester présentant une concentration de 0,5% (0,5 g/dl) dans un mélange de phénol/dichlorobenzène (50:50% en poids) à 25°C à l'aide d'un viscosimètre d'Ubbelohde (selon la norme DIN n° 53728, partie 3 de janvier 1985) à l'aide de l'équation

$$I.V. = \frac{\sqrt{1 + 1.4(R.V. - 1)} - 1}{0.35} \quad \texttt{(dl/g)}$$

**caractérisé en ce que** les particules (1) sont introduites au moins dans l'étape d) à un flux massique entre 40 et 100 tonnes par heure et une vitesse de sédimentation des particules dans le réacteur est supérieure à 2,6 jusqu'à 6 mètres par heure.

**2.** Procédé selon la revendication 1, **caractérisé en ce que** la réaction dans l'étape d) a lieu dans un flux de gaz inerte, les produits de réaction des réactions augmentant le poids moléculaire étant transférés des particules dans le gaz et une différence de pression entre l'entrée du gaz dans le réacteur et la sortie du gaz hors du réacteur étant située entre 450 et 1000 mbars.

**3.** Procédé selon l'une quelconque des revendications précédentes, **caractérisé en ce que** les particules de prépolymère de polyester sont transportées, entre l'étape b) de cristallisation et l'étape c) de préchauffage, d'un niveau de sortie (HA) à un niveau d'entrée (HE) plus élevé.

**4.** Procédé selon l'une quelconque des revendications précédentes, **caractérisé en ce que** les particules de prépolymère de polyester sont guidées, avant l'étape c), à travers un dispositif de dépoussiérage.

**5.** Procédé selon l'une quelconque des revendications précédentes, **caractérisé en ce que** les particules de prépolymère de polyester de l'étape a) présentent une teneur en groupes terminaux carboxyle ($X_{COOH}$) entre 0,25 et 0,6 et **en ce que**, pendant le traitement dans les étapes b), c) et d), la proportion de réaction d'estérification (E) par rapport aux réactions de polycondensation (E + T) est située entre 0,5 et 1.

**6.** Procédé selon l'une quelconque des revendications précédentes, **caractérisé en ce que** les particules de prépolymère de polyester chauffées provenant de l'étape c) sont transportées d'un niveau de départ (H0) à un niveau d'entrée (HR) dans le réacteur et le niveau d'entrée (HR) se situe entre 40 et 80 mm au-dessus du niveau de sortie H0.

**7.** Procédé selon l'une quelconque des revendications précédentes, **caractérisé en ce que** le transport des particules de prépolymère de polyester chauffées provenant de l'étape c) a lieu à une température de transport (TF) qui se situe de préférence entre 5 et 80°C sous le point de fusion cristallin du polyester.

**8.** Procédé selon l'une quelconque des revendications précédentes, **caractérisé en ce que** le transport des particules de prépolymère de polyester chauffées provenant de l'étape c) a lieu au moyen d'un transport pneumatique.

**9.** Procédé selon l'une quelconque des revendications précédentes, **caractérisé en ce que** le transport des particules de prépolymère de polyester chauffées provenant de l'étape c) a lieu via une conduite de transport présentant un diamètre interne (DF), le diamètre interne (DF) étant situé entre 250 mm et 500 mm.

**10.** Procédé selon l'une quelconque des revendications précédentes, **caractérisé en ce que** le transport a lieu à une vitesse de transport (vF) qui est située entre 5 et 12 m/s.

**11.** Procédé selon l'une quelconque des revendications précédentes, **caractérisé en ce que** le transport des particules de prépolymère de polyester chauffées provenant de l'étape c) a lieu via au moins deux conduites de transport.

**12.** Procédé selon l'une quelconque des revendications précédentes, **caractérisé en ce que** les particules sont introduites dans au moins un dispositif des étapes b), c) ou d) à un flux massique entre 40 et 100 tonnes par heure.

**13.** Dispositif pour la préparation d'un polyester thermoplastique selon l'une quelconque des revendications 1 à 12, comprenant.

    a) un réacteur a) de polycondensation en masse fondue pour la préparation de particules de prépolymère de polyester présentant une viscosité intrinsèque entre 0,35 et 0,75 dl/g,
    b) au moins un cristalliseur b) pour la cristallisation des particules de prépolymère de polyester pour la préparation de particules de prépolymère de polyester partiellement cristallines,
    c) au moins un préchauffage c) pour chauffer les particules de prépolymère de polyester partiellement cristallines à une température de réaction appropriée pour préparer des particules de prépolymère de polyester chauffées,
    d) au moins un réacteur d) pour la préparation de particules de polymère de polyester présentant une viscosité intrinsèque entre 0,70 et 0,95 dl/g, l'augmentation de la viscosité intrinsèque étant d'au moins 0,05, en particulier d'au moins 0,1 dl/g,
    la viscosité intrinsèque (I.V.) étant déterminée par mesure de la viscosité relative (R.V.) d'un échantillon de polyester présentant une concentration de 0,5% (0,5 g/dl) dans un mélange de phénol/dichlorobenzène (50:50% en poids) à 25°C à l'aide d'un viscosimètre d'Ubbelohde (selon la norme DIN n° 53728, partie 3 de janvier 1985) à l'aide de l'équation

$$I.V. = \frac{\sqrt{1 + 1.4(R.V. - 1)} - 1}{0.35} \quad \text{(dl/g)}$$

**caractérisé en ce qu'**un dispositif de dépoussiérage est disposé en amont du préchauffage c), le niveau d'entrée (HR) dans le réacteur d) est situé entre 40 et 80 mètres au-dessus du niveau de sortie H0 hors du préchauffage c).

**14.** Dispositif selon la revendication 13, caractérisé en ce le réacteur d) peut être exploité à un flux massique entre 40 et 100 tonnes de particules par heure, à un temps de séjour des particules dans le réacteur d) entre 6 et 30 heures et à une vitesse de sédimentation des particules dans le réacteur d) supérieure à 2,6 jusqu'à 6 mètres par heure.

**15.** Dispositif selon l'une quelconque des revendications 13 à 14, **caractérisé en ce que** le préchauffage c) et le réacteur d) sont reliés l'un à l'autre via au moins deux conduites de transport.

**16.** Dispositif selon l'une quelconque des revendications 13 à 15, **caractérisé en ce que** les conduites de transport sont introduites séparément dans le réacteur d), les entrées présentant une orientation différente ou étant disposées loin l'une de l'autre.

**17.** Dispositif selon l'une quelconque des revendications 13 à 16, **caractérisé en ce que** les conduites de transport présentent un diamètre interne (DF) entre 250 mm et 500 mm.

**18.** Dispositif selon l'une quelconque des revendications 13 à 17, **caractérisé en ce que** le cristalliseur b) et le préchauffage c) sont disposés l'un à côté de l'autre et reliés l'un à l'autre par une conduite de transport.

**19.** Procédé pour le dépoussiérage de particules de prépolymère de polyester partiellement cristallines, **caractérisé en ce que** le dépoussiérage a lieu dans un appareil à lit fluidisé à une température dans la plage de 100 à 250°C, en particulier de 130 à 200°C, à un débit spécifique de 10 à 100 t/h par m$^2$ de surface de tamis, en particulier supérieur à 15 t/h par m$^2$ de surface de tamis.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005025975 A1
- WO 0023497 A, Matthaei
- WO 0105566 A, Glöckner
- WO 05087838 A, Christel
- WO 03054063 A, Culbert
- WO 9622179 A, Stouffer
- EP 0541674 B1
- CH 2008000389 W
- EP 01789469 B1
- EP 1425146 A2
- WO 02068498 A

- DE 4300913 A1
- EP 1019663 A1
- CN 101579610 A
- CH 073508
- WO 0007698 A
- EP 0660746 B2
- DE 102004006861 A1
- EP 1337321 B1
- US 6010667 A
- DE 102007031653 A1

**In der Beschreibung aufgeführte Nicht-Patentliteratur**

- Modern Polyesters. Wiley Series in Polymer Science. J. Wiley & Sons Ltd, 2003